# NOUVEAU FASCICULE DE BREVET EUROPEEN

(11) **EP 0 310 459 B2**
(45) Date de publication et mention de la décision concernant l'opposition: **15.11.1995**
(45) Mention de la délivrance du brevet: 15.04.1992
(21) Numéro de dépôt: 88400149.6
(22) Date de dépôt: 25.01.1988
(51) Int. Cl.: A23C 1/04, A23C 9/15

(54) **Procédé nouveau d'obtention d'une poudre de lait, poudre de lait ainsi obtenue**
Verfahren zur Herstellung von Milchpulver, dabei hergestelltes Milchpulver
Process for making milk powder, milk powder obtained thereby

(30) Priorité: 30.09.1987 FR 8713496
(43) Date de publication de la demande: 05.04.1989
(73) Titulaire: COOPERATIVE LAITIERE D'ARTOIS ET DES FLANDRES LA PROSPERITE FERMIERE, F-62033 Arras Cédex (FR)
(72) Inventeur: Kergomard, Jean René, F-62000 Arras (FR); Boudier, Jean François, F-62217 Beaurains (FR); Gosselin, Daniel, F-62130 Saint Pol Sur Ternoise (FR); Ledein, Roger, F-62000 Arras (FR)
(74) Mandataire: Hirsch, Marc-Roger

(56) Documents cités:
- EP-A- 0 223 872
- CH-A- 405 245
- FR-A- 947 952
- FR-A- 1 283 859
- FR-A- 2 247 980
- US-A- 1 808 730
- US-A- 3 357 840
- Neth. Milk Dairy, 29, 212-224, 1975
- La Technique Laitière, no. 916, 21-25, 1977
- Proeftschrift, T. J. Burma, p.7, 1971
- Food Technology, juin 1975, p. 60-71
- Industries Aliment. et Agricoles, no. 9-10, 1971
- Dairy Industries Intern., p. 21-24, 1983
- Laits et Prod. Laitiers, TEC&DOC, p. 456-464, 1985

## Description

La présente invention a pour objet un procédé nouveau d'obtention d'une poudre de lait à teneur en matière grasse libre supérieure à 40%. Elle se rapporte également à la poudre de lait obtenue par mise en oeuvre de ce procédé.

Plus particulièrement, l'invention a pour objet un procédé nouveau d'obtention d'une poudre de lait du type Spray dont la teneur en matière grasse est de 20 à 45% et la teneur en matière grasse libre, exprimée par rapport à la matière grasse totale présente, est comprise entre 40 et 90%.

On connait des poudres ayant une teneur en matière grasse et une proportion de matière grasse libre, exprimée par rapport à la matière grasse totale présente, du même ordre que celles qui sont indiquées ci-dessus. Ces poudres du type Roller contiennent cependant des constituants insolubles protéiniques et minéraux généralement appelés "insolubles". De plus, elles se véhiculent mal car elles ne sont pas fluides.

Le brevet FR-A-1 283 859 a pour objet un procédé de fabrication d'une poudre instant, mais ayant une teneur en matière grasse libre faible, et qui requiert une étape d'homogénéisation.

Le brevet CH-A-405 205 a aussi pour objet un procédé de fabrication d'une poudre instant, mais ayant une teneur en matière grasse libre faible, et qui nécessite une étape d'homogénéisation.

Le brevet EP-A-0 223 872 a pour objet un procédé de fabrication de poudre ayant une teneur en matière grasse libre élevée, mais le procédé implique une étape d'homogénéisation et la poudre obtenue contient le lactose substantiellement sous forme cristalline.

La présente invention a pour objet des poudres de lait ne contenant pas lesdits "insolubles" et conduisant à l'obtention de produits présentant un goût plus "franc" et plus "laitier". En d'autres termes, par exemple, les produits chocolatés dans la production desquels ces poudres de lait sont employées ont un goût plus "franc" de chocolat et un goût plus "laitier" que les chocolats contenant les poudres précités. Les poudres obtenues par la présente invention sont d'autre part plus fluides. De plus, l'étape d'homogénéisation présente dans tous les procédés selon l'art antérieur est absente dans le procédé selon la présente invention.

Le procédé selon la présente invention de production d'une poudre de lait à teneur en matière grasse libre supérieure à 40%, consiste à soumettre à une atomisation à une température comprise entre 180 et 195 °C :
- d'une part un concentré de lait écrémé ou une poudre de lait écrémé
- d'autre part une crème ayant une concentration en matière grasse égale ou supérieure à 38 % qui a été au préalable soumise à un traitement thermique et à une maturation à une température de l'ordre de 3 à 12°C pendant 3 à 5 heures,
puis à éventuellement soumettre le mélange résultant à un séchage complémentaire par passage dans un lit fluidisé vibrant et à un refroidissement final.

Selon une forme d'exécution du procédé, le concentré de lait écrémé est un concentré maigre obtenu à partir de lait écrémé ayant été soumis à un chauffage à une température de 90-98°C et à une concentration dans un évaporateur opérant sous vide.

Selon une autre forme d'exécution du procédé, le concentré maigre ou la poudre de lait écrémé et la crème maturée sont introduits séparément dans la zone d'atomisation.

Selon encore une autre forme d'exécution du procédé, le concentré maigre ou la poudre de lait écrémé et la crème maturée sont injectés dans la zone d'atomisation par des ajutages différents.

Selon une autre forme encore d'exécution du procédé, ces ajutages consistent en deux étages d'une turbine à double étage ou en deux séries de buses adaptées et spécialisées.

Selon une autre forme d'exécution du procédé, le concentré maigre et la crème maturée sont mélangés préalablement à ladite atomisation.

Selon un autre mode de réalisation du procédé de l'invention, la maturation précitée consiste en un refroidissement suivi d'une cristallisation.

Selon un autre mode de réalisation encore du procédé de l'invention, le séchage complémentaire est effectué dans un lit fluidisé, de préférence à une température comprise entre 80 et 120°C.

Selon encore un autre mode de réalisation du procédé précité, le refroidissement final est effectué dans un lit fluidisé vibrant par de l'air froid sec.

Selon une forme d'exécution du procédé de l'invention, le concentré maigre a une teneur en matière sèche de 30 à 55% et, de préférence, de l'ordre de 48 à 50%.

Selon une autre forme d'exécution du procédé de l'invention, la crème employée est une crème concentrée ayant une teneur en matière grasse supérieure à 38%, de préférence de l'ordre de 50% de matière grasse.

La présente invention a pour objet une poudre de lait obtenue par atomisation à l'aide du procédé précité, contenant de 20 à 45% de matière grasse, la teneur en matière grasse libre exprimée par rapport à la matière grasse totale présente étant comprise entre 40 et 90%.

Selon une forme d'exécution de l'invention, la poudre de lait contient de 20 à 45% de matière grasse et de 40 à 75% de matière grasse libre exprimée par rapport à la matière grasse totale présente. De préférence, la teneur en matière grasse est de 24 à 30%.

Selon une autre forme d'exécution de l'invention, la poudre de lait contient de 20 à 45% de matière grasse et de 75 à 90% de matière grasse libre exprimée par rapport à la matière grasse totale présente. De préférence, la teneur en matière grasse est de 24 à 30%.

Une installation pour mettre en oeuvre les procédés précités comporte une première zone dite de préparation du concentré maigre comportant une zone de prétraitement thermique et une zone d'évaporation sous vide, une deuxième zone dite de préparation de la crème maturée qui comporte une zone de traitement thermique et une zone de maturation, les zones d'évaporation sous vide et de maturation étant respectivement reliées à une zone d'atomisation, éventuellement précédée d'une zone de mélange, et la zone d'atomisation étant intégrée à une zone de séchage et suivi, éventuellement, d'une zone de séchage complémentaire et d'une zone de refroidissement final.

La poudre de lait précitée peut être appliquée à la fabrication de produits chocolatiers et autres produits alimentaires.

D'autres buts et avantages de l'invention apparaîtront à la lecture de la description suivante et des exemples.

Sauf indications contraires, les proportions de matière grasse libre sont exprimées par rapport à la matière grasse totale.
- la figure 1 représente une installation pour la fabrication de poudre de lait à teneur en matière grasse libre moyenne ou élevée (40 à 75%);
- la figure 2 représente une installation pour la fabrication de poudre de lait à teneur en matière grasse libre très élevée (75 à 90%);
- la figure 3 représente une installation pour la fabrication d'une poudre de lait à teneur en matière grasse libre très élevée avec injection de poudre de lait écrémé.

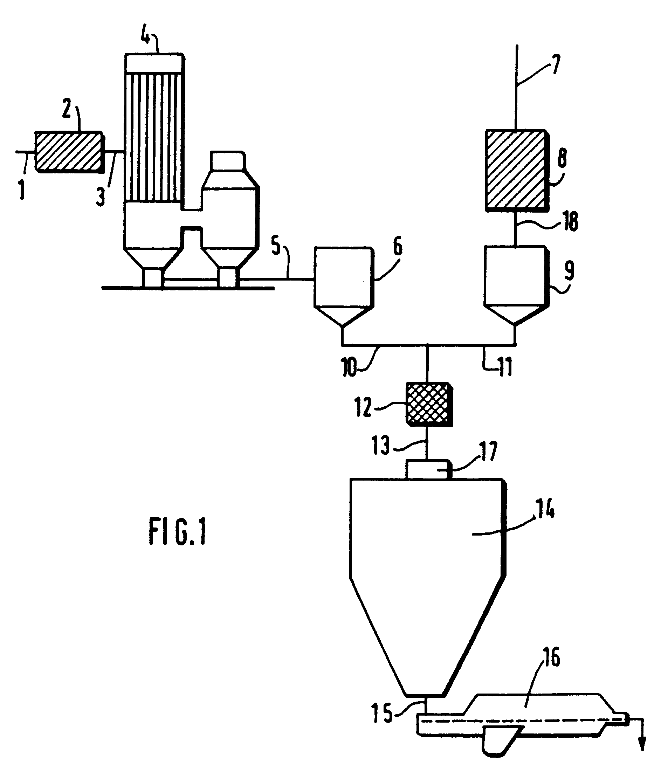

L'installation représentée sur la figure 1 comporte une tuyauterie d'arrivée 1 du lait écrémé, débouchant dans un appareil de traitement thermique 2 consistant en un réchauffeur, pasteurisateur ou stérilisateur, une tuyauterie 3 relie la sortie de cet appareil 2 à un évaporateur sous vide 4 dont une tuyauterie d'extraction 5 conduit à un bac tampon 6. La crème est amenée par la tuyauterie 7 dans un appareil de traitement thermique 8 consistant en un pasteurisateur ou stérilisateur relié par une tuyauterie 18 à un tank de maturation physique 9.

Du bac tampon 6 et du tank de maturation 9 partent respectivement les tuyauteries 10 et 11 qui aboutissent à une zone de mélange 12 reliée par une tuyauterie 13 à la tour de séchage 14 équipée d'une turbine ou de buses.

A la base de cette tour de séchage 14, un système d'extraction 15 amène la poudre de lait dans un appareil de séchage complémentaire 16 comportant, de préférence, un lit fluidisé vibrant.

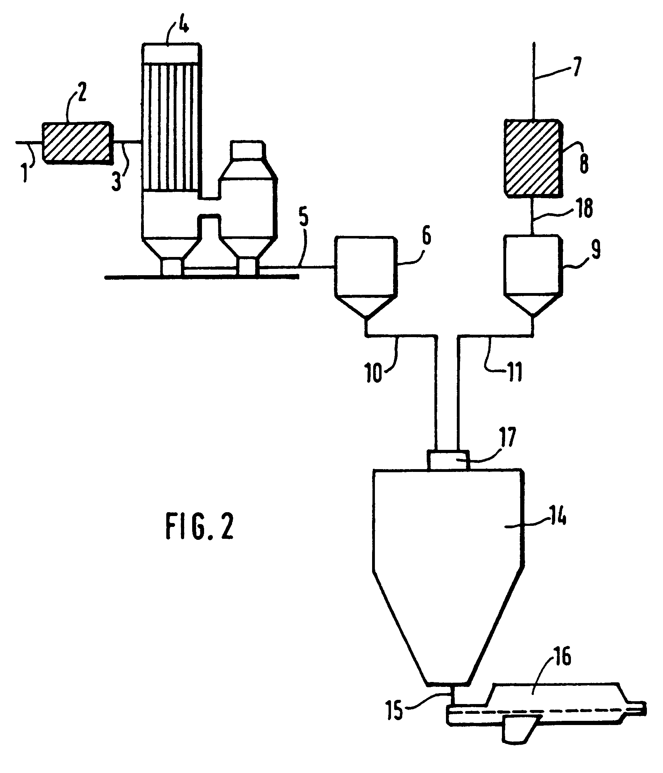

L'installation de la figure 2 est identique à celle de la figure 1 si ce n'est que le mélangeur statique 12 a été supprimé et que les deux tuyauteries 10 et 11 conduisent directement au système d'injection dans la tour de séchage 14.

Le système d'injection consiste en des ajutages différents pour le concentré maigre et pour la crème maturée.

Un premier système d'injection peut consister en une turbine à deux étages, le concentré maigre et la crème maturée étant amenés chacun à l'un des étages et pulvérisés directement dans la tour de séchage.

Un autre système peut consister en 2 buses (ou une double série de buses), le concentré maigre étant pulvérisé par une buse (ou une série de buses) et la crème maturée par une autre buse (ou autre série de buses).

Enfin un troisième système peut consister en une injection en tête ou en milieu de tour, de poudre de lait écrémé et en une pulvérisation de crème maturée par une buse (ou une série de buses) ou par une turbine simple.

### EXEMPLE 1

Dans l'installation de la figure 1, on introduit par la tuyauterie 1 du lait écrémé à une température de 4°C selon un débit de 12 000 l/h. Dans la zone de traitement thermique 2, le lait écrémé est amené à une température de 95°C puis par la tuyauterie 3 est amené dans le premier effet de l'évaporateur 4 opérant sous un vide de 250 mbar. Par la tuyauterie 7, est amenée de la crème à 40% de matière grasse, à une température de 8°C et selon un débit de 955 l/h dans un appareil de traitement thermique. De cet appareil, par la tuyauterie 18, la crème, à une température de 5°C, est conduite dans un tank de maturation où elle est maintenue à cette température durant 4 heures pour permettre sa cristallisation.

Par les tuyauteries 10 et 11, les produits respectifs issus du bac tampon 6 et du tank de maturation 9 sont mélangés dans le mélangeur statique 12 et le mélange est atomisé dans le tour de séchage 14 par une turbine simple. La température à proximité de la zone d'atomisation dans la tour de séchage est de l'ordre de 190°. Par le système d'extraction 15, la poudre de lait résultante contenant encore 5% d'humidité est amenée au lit fluidisé vibrant. On recueille la poudre de lait produite selon un débit de l 600 kg/h.

La poudre de lait obtenue contient 24% de matière grasse et 70% de matière grasse libre.

### EXEMPLE 2

On opère selon la méthode de l'exemple 1 dans l'installation de la figure 1. La crème amenée par la conduite 7 peut être remplacée par une crème concentrée contenant 50% de matière grasse. La crème concentrée est alors amenée selon un débit de 764 1/h, le traitement thermique dans l'appareil 8 est effectué à une température de 92°C, la masse résultante est refroidie dans le tank 9 à 10°C et la durée de maturation est de 4 h.

La poudre de lait recueillie en fin de traitement contient 24% de matière grasse et 70% de matière grasse libre.

### EXEMPLE 3

On opère sur l'installation de la figure 2.

Dans l'installation de la figure 2, on introduit, par la tuyauterie 1, du lait écrémé à une température de 4°C selon un débit de 12 000 l/h. Dans la zone de traitement thermique 2, le lait écrémé est amené à une température de 95°C, puis par la tuyauterie 3 dans le premier effet de l'évaporateur 4 opérant sous un vide de 250 mbar.

Ensuite, le lait écrémé ainsi traité est amené au bac tampon 6 par la tuyauterie 5.

Par la tuyauterie 7, est amenée de la crème à 40% de matière grasse, à une température de 8°C et selon un débit de 1 055 l/h dans un appareil de traitement thermique 8. De cet appareil, par la tuyauterie 18, la crème à une température de 5°C, est amenée dans un tank de maturation où elle est maintenue à cette température durant 4 heures pour permettre sa cristallisation.

Par les tuyauteries 10 et 11, les produits respectifs issus du bac tampon 6 et du tank de maturation 9 sont amenée dans la tour de séchage 14 par les moyens d'injection 17 formés d'une turbine à deux étages dont le premier est alimenté par le concentré maigre et le deuxième par la crème maturée.

La température à proximité de la zone d'atomisation dans la tour de séchage est de l'ordre de 190°C.

Par la tuyauterie 15, la poudre de lait résultante contenant encore 5% d'humidité est amenée dans la zone de séchage 16 consistant en un lit fluidisé vibrant. On recueille la poudre de lait produite selon un débit de 1 650 kg/h. La poudre de lait obtenue contient 26% de matière grasse et 85% de matière grasse libre.

### EXEMPLE 4

On opère selon la méthode de l'exemple 3 dans l'installation de la figure 2.

Dans l'installation de la figure 2, on introduit, par la tuyauterie 1, du lait écrémé à une température de 4°C selon un débit de 12 000 l/h. Dans la zone de traitement thermique 2, le lait écrémé est chauffé à une température de 95°C, puis est amené par la tuyauterie 3 dans le premier effet de l'évaporateur 4 opérant sous un vide de 250 mbar.

Ensuite le lait écrémé ainsi traité est amené au bac tampon 6 par la tuyauterie 5.

Par la tuyauterie 7, est amenée de la crème à 50% de matière grasse, à une température de 10°C et selon un débit de 844 l/h dans un appareil de traitement thermique 8. De cet appareil, par la tuyauterie 18, la crème, à une température de 10°C, est amenée dans un tank de maturation 9 où elle est maintenue à cette température durant 4 heures pour permettre sa cristallisation.

Par les tuyauteries 10 et 11, les produits respectifs issus du bac tampon 6 et du tank de maturation 9 sont amenés dans la tour de séchage 14 par des moyens d'injection 17 formés de deux séries de buses, dont la première est alimentée par le concentré maigre et la seconde par la crème maturée concentrée. La température à proximité de la zone d'atomisation dans la tour de séchage est de l'ordre de 190°C approximativement.

Par le système d'extraction 15, la poudre de lait résultante contenant encore 5% d'humidité est amenée dans la zone de séchage 16 qui consiste en un lit fluidisé vibrant. On recueille la poudre de lait produite selon un débit de 1 650 kg/h. La poudre de lait obtenue contient 26% de matière grasse et 85% de matière grasse libre.

### EXEMPLE 5

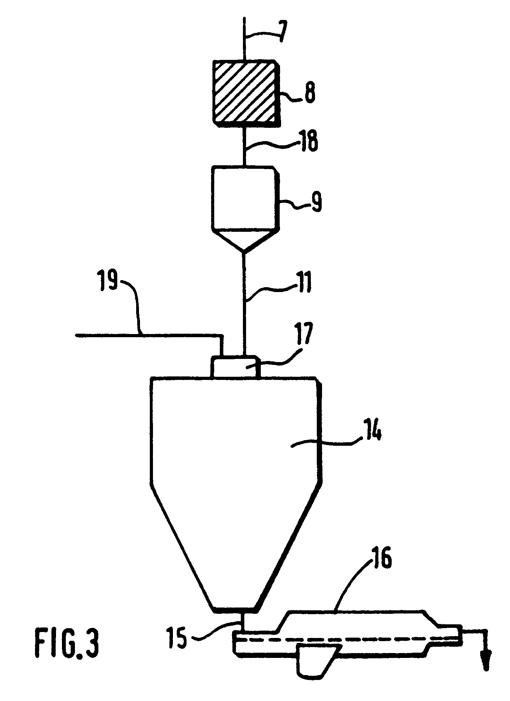

On opère sur l'installation de la figure 3.

Par la tuyauterie 7, est amenée de la crème à 40% de matière grasse, à une température de 8°C et selon un débit de 955 l/h dans un appareil de traitement thermique. De cet appareil, par la tuyauterie 18, la crème, à une température de 5°C, est amenée dans un tank de maturation où elle est maintenue à cette température durant 4 heures pour permettre sa cristallisation.

Par la tuyauterie 11, la crème issue du tank de maturation 9 est pulvérisée dans la tour de séchage 14 par une turbine simple.

La poudre de lait écrémé, amenée par la tuyauterie 19, est injectée à un débit de 1 160 kg/h en haut de tour dans la zone de pulvérisation de la crème maturée, au niveau du disperseur.

La température de la zone de séchage est de l'ordre de 190°C.

Par le système d'extraction 15, la poudre de lait résultante contenant encore 5% d'humidité est amenée dans la zone de séchage 16 qui consiste en un lit fluidisé vibrant.

On recueille la poudre de lait produite selon un débit de 1 600 kg/h.
La poudre de lait obtenue contient 24% de matière grasse et 85% de matière grasse libre.

## Revendications

1. Procédé de production de poudre de lait à teneur en matière grasse libre supérieure à 40 %, caractérisé en ce qu'il consiste à soumettre à une atomisation à une température comprise entre 180 et 195 °C :
- d'une part un concentré de lait écrémé ou une poudre de lait écrémé
- d'autre part une crème ayant une concentration en matière grasse égale ou supérieure à 38 % qui a été au préalable soumise à un traitement thermique et à une maturation à une température de l'ordre de 3 à 12°C pendant 3 à 5 heures, ladite crème n'ayant pas été homogénéisée préalablement,
puis à éventuellement soumettre le mélange résultant à un séchage complémentaire par passage dans un lit fluidisé vibrant et à un refroidissement final.

2. Procédé selon la revendication 1, caractérisé en ce que le concentré de lait écrémé est un concentré maigre obtenu à partir de lait écrémé ayant été soumis à un chauffage à une température de 90-98°C et à une concentration dans un évaporateur opérant sous vide.

3. Procédé selon la revendication 1 ou 2, caractérisé en ce que le concentré maigre ou la poudre de lait écrémé et la crème maturée sont introduits séparemment dans la zone d'atomisation.

4. Procédé selon une quelconque des revendication 1 à 3, caractérisé en ce que le concentré maigre ou la poudre de lait écrémé et la crème maturée sont injectés dans la zone d'atomisation par des ajutages différents.

5. Procédé selon la revendication 4, caractérisé en ce que ces ajutages consistent en deux étages d'une turbine à double étage ou en deux séries de buses adaptées et spécialisées.

6. Procédé selon la revendication 1 ou 2, caractérisé en ce que le concentré maigre et la crème maturée sont mélangés préalablement à ladite atomisation.

7. Procédé selon une quelconque des revendications 1 à 6, caractérisé en ce que la maturation de la crême précitée consiste en un refroidissement suivi d'une cristallisation.

8. Procédé selon une quelconque des revendications 1 à 7, caractérisé en ce que le séchage complémentaire est effectué dans un lit fluidisé, de préférence à une température comprise entre 80 et 120°C.

9. Procédé selon une quelconque des revendications 1 à 8, caractérisé en ce que le refroidissement est effectué dans un lit fluidisé vibrant par de l'air froid sec.

10. Procédé selon une quelconque des revendications 2 à 9, caractérisé en ce que le concentré maigre a une teneur en matière sèche de 30 à 55% et, de préférence, de l'ordre de 48 à 50%.

11. Procédé selon l'une quelconque des revendications 1 à 10, caractérisé en ce que la crème employée est une crème concentrée ayant une teneur en matière grasse supérieure à 38%, de préférence de l'ordre de 50% de matière grasse.

12. Poudre de lait obtenue à l'aide du procédé selon une quelconque des revendications 1 à 11.

## Claims

1. Process for producing milk powder having a free fatty matter content greater than 40%, characterized in that it consists in subjecting to a spraying operation at a temperature comprised between 180 and 195°C:
- firstly, a concentrate of skimmed milk or a powder of skimmed milk
- secondly, a cream having a fatty matter concentration equal to or greater than 38% which previously had been subjected to heat treatment and to maturing at a temperature of the order of 3 to 12°C for 3 to 5 hours, said cream not having been previously homogenized,
and then optionally subjecting the resulting mixture to supplementary drying by passing it through a vibrating fluidised bed followed by final cooling.

2. Process according to claim 1, characterized in that the skimmed milk concentrate is a low fat concentrate obtained starting from skim milk that was heated to a temperature of 90 to 98°C and to concentration in an evaporator operating under vacuum.

3. Process according to claim 1 or 2, characterized in that the low fat concentrate or the skimmed milk powder and the matured cream are introduced separately into the spraying zone.

4. Process according to any one of claims 1 to 3, characterized in that the low fat concentrate or the skimmed milk powder and the matured cream are sprayed into the spraying zone by means that differ from each other.

5. Process according to claim 4, characterized in that said means consist of two stages of a twin-stage turbine or of two series of jets that are suitably adapted and are specific to the relevant substance.

6. Process according to claim 1 or 2, characterized in that the low fat concentrate and the matured cream are mixed Previously to said spraying.

7. Process according to any one of claim 1 to 6, characterized in that the maturing of the above said cream is obtained by cooling followed by crystallisation.

8. Process according to any one of claims 1 to 7, characterized in that the supplementary drying is carried out in a fluidised bed, preferably at a temperature comprised between 80 and 120°C .

9. Process according to any one of claims 1 to 8, characterized in that the cooling is carried out in a vibrating fluidised bed using cold dry air.

10. Process according to any one of claims 2 to 9, characterized in that the low fat concentrate has a dry matter content of 30 to 55% and, preferably, of the order of 48 to 50%.

11. Process according to any one of claims 1 to 10, characterized in that the cream employed is a concentrated cream having a fatty matter content greater than 38%, preferably of the order of 50% of fatty matter.

12. A milk powder obtained using the process according to any one of claims 1 to 11.

## Patentansprüche

1. Verfahren zur Herstellung von Milchpulver mit einem Gehalt in freiem Fett von mehr als 40%, welches folgende Verfahrensschritte umfasst: man zerstäubt bei einer Temperatur von 180 bis 195°C:
- einerseits ein entrahmtes Milchkonzentrat oder ein entrahmtes Milchpulver, und
- andererseits zuvor einer Wärmebehandlung und während 3 bis 5 Stunden einem Reifungsprozess bei etwa 3 bis 12°C unterzogenen Rahm (Sahne) mit einem Fettgehalt von wenigstens 38%, wobei der Rahm vorangehend nicht homogenisiert wurde,
wonach man ggf. das derart erzielte Gemisch zwecks zusätzlichen Trocknens durch ein Vibrationsfliessbett leitet und sodann abkühlt.

2. Verfahren nach Anspruch 1, dadurch gekennzeichnet, dass das entrahmte Milchkonzentrat ein aus entrahmter Milch nach Erwärmung derselben auf 90 bis 98°C und nach einem nachfolgenden, in einem Vakuumverdampfer durchgeführten Konzentrationsschritt erzeugtes Magermilchkonzentrat ist.

3. Verfahren nach Anspruch 1 oder 2, dadurch gekennzeichnet, dass das Magermilchkonzentrat bzw. das entrahmte Milchpulver und der gereifte Rahm getrennt in den Zerstäubungsbereich eingebracht werden.

4. Verfahren nach einem der Ansprüche 1 bis 3, dadurch gekennzeichnet, dass das Magermilchkonzentrat bzw. das entrahmte Milchpulver und der gereifte Rahm durch gesonderte Einspritzmittel in die Zerstäubungszone eingebracht werden.

5. Verfahren nach Anspruch 4, dadurch gekennzeichnet, dass die Einspritzmittel durch die beiden Stufen einer zweistufigen Turbine oder durch zwei Gruppen geeigneter Spezialdüsen gebildet werden.

6. Verfahren nach Anspruch 1 oder 2, dadurch gekennzeichnet, dass man das entrahmte Konzentrat und den gereiften Rahm vor der Zerstäubung miteinander mischt.

7. Verfahren nach einem der Ansprüche 1 bis 6, dadurch gekennzeichnet, dass die Reifung durch Kühlung und darauf folgende Kristallisierung erfolgt.

8. Verfahren nach einem der Ansprüche 1 bis 7, dadurch gekennzeichnet, dass die zusätzliche Trocknung in einem Fliessbett und vorzugsweise bei 80 bis 120°C erfolgt.

9. Verfahren nach einem der Ansprüche 1 bis 8, dadurch gekennzeichnet, dass die endgültige Abkühlung vermittels trockener Kaltluft in einem Vibrationsfliessbett erfolgt.

10. Verfahren nach einem der Ansprüche 2 bis 9, dadurch gekennzeichnet, dass das Magermilchkonzentrat einen Trockensubstanzgehalt von 30 bis 55%, vorzugsweise von etwa 48 bis 50% aufweist.

11. Verfahren nach einem der Ansprüche 1 bis 10, dadurch gekennzeichnet, dass der verwendete Rahm (Sahne) konzentrierter Rahm mit einem Fettgehalt von mehr als 38%, vorzugsweise von etwa 50% ist.

12. Vermittels des Verfahrens nach einem der Ansprüche 1 bis 11 hergestelltes Milchpulver.
